# EUROPEAN PATENT SPECIFICATION

(11) **EP 3 319 707 B1**
(45) Date of publication and mention of the grant of the patent: **10.05.2023**
(21) Application number: 16821745.3
(22) Date of filing: 07.07.2016
(51) Int. Cl.: B01D 33/21, B01D 33/46, B01D 33/68

(54) **DISC FILTER WITH AGITATOR SYSTEM**
SCHEIBENFILTER MIT RÜHRSYSTEM
FILTRE À DISQUE AVEC SYSTÈME D'AGITATEUR

(30) Priority: 09.07.2015 SE 1550999
(43) Date of publication of application: 16.05.2018
(73) Proprietor: Valmet Aktiebolag, 851 94 Sundsvall (SE)
(72) Inventor: BJÖRNVALL, Patrik, SE-663 32 Skoghall (SE); SÖDERMAN, Jerk, SE-653 42 Karlstad (SE); RANSJÖ, Henrik, SE-663 41 Hammarö (SE)
(74) Representative: Becker Kurig & Partner Patentanwälte mbB
(86) International application number: PCT/SE2016/050702
(87) International publication number: WO 2017/007417

(56) References cited:
- WO-A2-98/16292
- GB-A- 348 556
- US-A1- 2004 045 913

## Description

### Background of the Invention

The invention relates to disc filters where agitation systems are used in the vat preventing settling of fine particle material in the bottom of the vat. This problem is especially seen in disc filters used in the recovery island of a pulp mill, where lime mud particles are suspended in a weak or strong liquor. The lime mud particles soon settles in areas of the disc filter where the flow of the suspension is stagnant, and form dense and incompressible layers of lime cake deposits.

### Prior Art

Several solutions has been presented for avoidance of settling of suspended lime mud particles in disc filters. Among these agitator systems are so called "mammuth" pumps, eductors or mechanical stirring elements.

An example using "mammoth" pumps is shown in Celleco Hedemora AB's (now Valmet AB) patent WO93/23140, where one single "mammoth" pump is arranged in the lowermost position of the vat. The "mammoth" pump is characterized by injecting air into an eductor like nozzle that subject the surrounding lower parts of the vat with a suction force, thus withdrawing some of the suspension into the eductor like nozzle. The eductor like nozzle is directing the flow upwardly. However, one disadvantage is that the inlet flow with raw suspension to be filtered is arranged orthogonally to the flow from the mammoth pump, and the rotation of the discs are directed opposite to the inflow of raw suspension. Another is that the single "mammoth" pump may not prevent settling at outer ends of the vat, and the very strong upwardly directed flow from the "mammoth" pump may interfere with precoat on adjacent filter discs.

Another example of improvement is shown in Baker Hughes Inc's WO98/16292. In essence, the improvement here is limited to an exchange of the air as driving medium for an eductor to instead using the inflow of raw suspension to be filtered as driving medium for the eductor. However, this design has been used in many disc filters on the market, also those sold by Valmet AB.

Yet another system has been used in disc filters, also those delivered by Valmet AB, as the above anti settling systems still did not prevent settling in entire vat. In this system was a reciprocating cradle rake installed in the bottom of the vat, sweeping over the entire bottom. However, the lime mud could in some filters form dense packed and practically incompressible deposits that subjected the cradle mechanism to very high mechanical load that in some cases led to that the cradle rake broke down.

Further, in some disc filters alternative mechanical stirrers have been used, and one such variant is to attach small paddle members on the outer periphery of the filter discs, such that these paddle members bring about a stirring action close to the bottom wall of the vat during rotation of the discs. However, this resulted in more load on the discs that may deflect the position of the discs to such an extent that the discs may intersect with the doctor blade which then soon tear up the filter cloths on the discs.

Hence, even if several solutions have been proposed and used in real environment, no anti settling system has been available that totally prevents settling and minimizes mechanical action on the fine particles in the suspension. In disc filters where the suspended solids in the suspension are lime mud particles, it is essential to limit mechanical action on the particles as excessive pumping and agitation in pumps may reduce particle size and as a result of that radically reduce the filterability of the suspension as the filter may be blocked.

GB 348 556 A discloses a filtration system for separating solids from liquids by continuous filtration, the mixture being filtered is kept homogenous by agitating and adding a clear liquid similar in character to the filtrate. With the apparatus, a portion of the filtrate is used as the additional liquid. The filtrate is drawn from a rotating drum filter through a pipe to a tank by a vacuum pump. A pump passes part of the liquid from the tank to discharge through a barrel and the remainder through pipes, and a flexible hose to pipes, which are provided with nozzles and extend longitudinally in the tank below the filter.

### Summary of the Invention:

The general objective of the invention is to improve agitation in the vat of a disc filter such that settling of fine particles suspended in the suspension is more efficiently prevented, and using a minimum of mechanical impact on the fine particles and thus maintains a high filterability.

Hence, the invention is provided in appended claim 1. Beneficiation embodiments are provided in the dependent claims. The invention is related to a disc filter (1) with an agitator system, used to filter out fine particle material in a raw suspension, comprising: a vat (10) with at least a semicircular bottom wall located in bottom part of the disc filter (1); a rotating shaft with a multitude of filter discs rotating in the vat. Further, a doctor blade is arranged parallel with the filter surface of the filter disc, with a collection chute located under the doctor blade. The collection chute forming a substantially vertical box-like collection chute with an upper opening under the doctor blade and a lower outlet in the lower part of the semicircular bottom part of the vat. Said box-like collection chute has two walls oriented in parallel with the filter surface of the filter disc and two walls oriented orthogonally to the filter surface of the filter disc. A first nozzle (31) and a second nozzle (32) are arranged in the disc filter (1). The inventive agitator system for this kind of disc filter is characterized in that the first nozzle (31) is arranged between two collection chutes and between two walls of these chutes that are oriented parallel with the filter surface of the filter disc. Further, the second nozzle (32) is arranged at one of the walls of the collection chute oriented orthogonally with the filter surface of the filter disc, and wherein both the first and second nozzles (31 and 32 respectively) are oriented such that the outflow from the nozzles coincides and are parallel to the semicircular form of the vat.

By this arrangement with a first and second nozzle (31 and 32 respectively), one arranged between chutes, and one at a wall of the chute, could the entire bottom wall of the vat be subjected to an intensified circulation that prevents settling in bottom part of the vat. And by having the very same flow direction from the nozzles outlet flow from both nozzles can assist each other in establishment of a strong agitating flow not reducing effect from the other nozzle as is the case may be in prior art systems where nozzles and/or inlets are arranged orthogonally to each other.

In one embodiment of the invention the first nozzle (31) is arranged in a circumferential position in the semicircular bottom at an angular position (α) at least 5 degrees ahead of the second nozzle (32), and at the most 90 degrees ahead of the second nozzle (32). By this design the later positioned nozzle will assist in creating an

intense flow as the outlet flow adds on to the first flow established by the nozzle positioned earlier. In another embodiment of the invention the first nozzle (31) is arranged in a vertical plane crossing the shaft (11) that also intersects with a disc, thus injecting flow towards the outer periphery of the disc. The disc may then help to contain a strong flow between the periphery of the disc and the bottom wall (10a) of the vat, in a narrow gap established there between. As the discs conventionally do not have any active filtering surface at the radially directed surface of the disc, also no interference with precoat formation or filtration process could occur by the strong flow in the gap.

in a preferred embodiment of the invention a recirculation system is connected to one of the first and second nozzles (31 and 32 respectively), comprising an inlet in the vat for extracting a part of the suspension kept in the vat, a piping system connecting the inlet with the nozzle in concern, and a pump in said piping system. The supply of suspension to that nozzle connected to the recirculation system may then be controlled independently of the other.

### Detailed Description of the Invention

### CONVENTIONAL DISC FILTER FEATURES

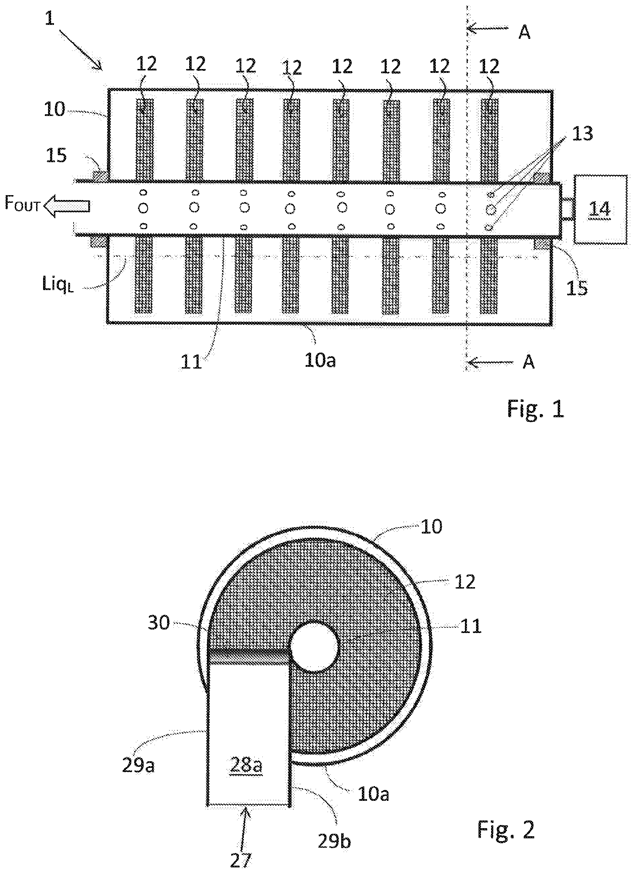

In figures 1 and 2 are disclosed basic well known details of a disc filter.

The disc filter 1 is used to filter out fine particle material in a raw suspension and comprises a rotating hollow shaft 11 with a multitude of filter disc 12 rotating in a vat 10 with at least a semicircular bottom wall 10a located in bottom part of the disc filter. The filter discs drains the filtrate to the hollow shaft via outlets 13.

A doctor blade 30 is arranged parallel with the filter surface of the filter disc 12, and a collection chute is located under the doctor blade and forms a substantially vertical box like collection chute with an upper opening 26 under the doctor blade and a lower outlet 27 in the lower part o` the semicircular bottom part 10a of the vat. Said box like collection chute has two walls 29a/29b oriented in parallel with the filter surface of the filter disc 12 and two walls 28a/28b oriented orthogonally with the filter surface of the filter disc 12.

The disc filter 1 includes at least one disc 12. The disc12 is similar to those described in the prior art in that solid material is removed from raw slurry by forcing the liquid through filtering discs 12, while the solid fine particle material accumulates on the filter. The liquid is forced through the discs 12 by creating a pressure differential between the inside of the filter housing 10 and the outlet. The discs 12 may be a perforated material such as metal and covered with a fine mesh cloth such as a polypropylene cloth or any other suitable cloth material. The filter material is referred to generally as the filter cloth. Each disc 12 is divided into disc sectors (not shown) which are individually covered with the filter cloth. The discs 12 are positioned within the housing 10 that holds the raw solid/liquid slurry in bottom part at a certain liquid level Liq_{L}. The level of the raw slurry can vary but typically is approximately close to or below the center of the disc 12. As the discs 12 rotate, each sector fully enters the slurry and an amount of solid material is deposited on the surface of each disc sector. The solid material is then removed from each sectorto separate the solid from the liquid. When filtering green or white liquor slurries in the recovery island of a pulp mill the filter cloth as such is not sufficient to reach a low particle content in the filtrate.

The cloth is more used to be able to form a precoat layer of fine particles on the cloth, and after establishment of the precoat effective filtration can begin obtaining a filtrate with low particle content. When lime mud particles build up on this precoat, a scraper mechanism is used to remove the particles

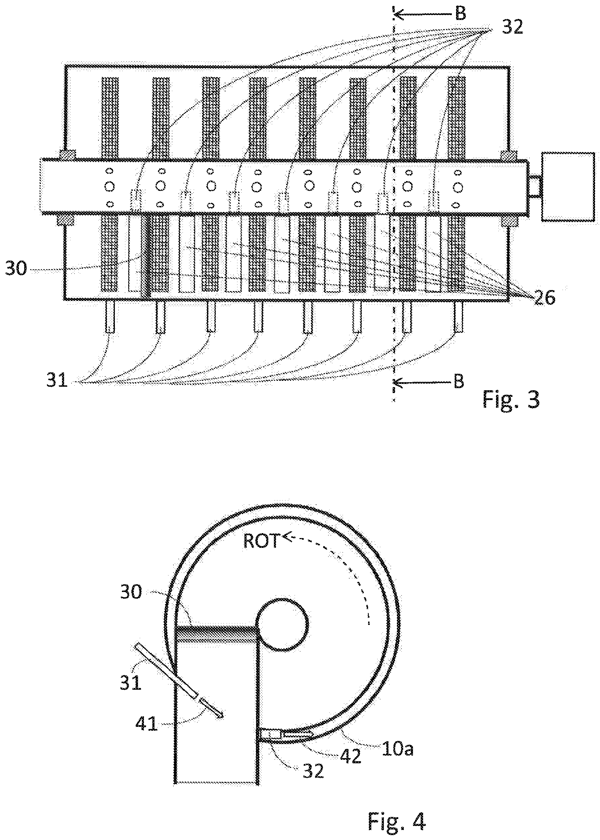

The scraper mechanism includes a doctor blade 30 that removes the cake layer from the precoat layer. During filtration, the disc 12 rotates (as shown on Fig. 4, "ROT"). As each disc sector passes through the slurry and emerges from the slurry, additional solid material is deposited on the surface of the disc sector. As the disc sectors pass the doctor blade 30, the cake layer formed on top of the precoat layer is removed. The removed solid material falls by gravity into a box like chute with an inlet 26 arranged below the doctor blade 30.

The disc filter may also include low pressure wash showers and precoat renewal high pressure jet system, for example the SQUIRT^{™} system sold by Valmet, but these are not shown as they play no role in vat agitation. Stationary low pressure jet systems with multiple fan nozzles arranged on a beam are conventionally used to implement a displacement wash of the precoat. Movable single high pressure jet nozzle or nozzles are used to remove the precoat down to the filter cloth, and subsequent filter cycle will quickly fill the exposed groove in the precoat with fresh and unblocked precoat. Hence the total precoat area could thus be renewed in a continuous manner. The high pressure jet may also be so efficient that also the filter cloth obtains a cleaning effect.

### Inventive agitation system

As known in the prior art solid material will settle at the bottom of the housing 10 and can be extremely difficult to remove and can cause mechanical problems. The agitation system will be explained first with reference to figures 3-7.

The inventive agitation system includes a first nozzle (31) arranged between two collection chutes (26) and between two walls (28a/28b) of these chutes that are oriented parallel with the filter surface of the filter disc (12), and a second nozzle (32) is arranged at one of the walls (29b) of the collection chute oriented orthogonally with the filter surface of the filter disc, and wherein both the first and second nozzles (31 and 32 respectively) are oriented such that the outflow (41 and 42 respectively) from the nozzles coincides and are parallel to the semicircular form of the vat. The first nozzle (31) is arranged in a circumferential position in the semicircular bottom at an angular position (α) at least 5 degrees ahead of the second nozzle (32), and at the most 90 degrees ahead of the second nozzle (32).

As could be seen in figure 3 the first nozzle (31) is arranged in a vertical plane crossing the shaft (11) that also intersects with a disc 12, thus injecting flow towards the outer periphery of the disc.

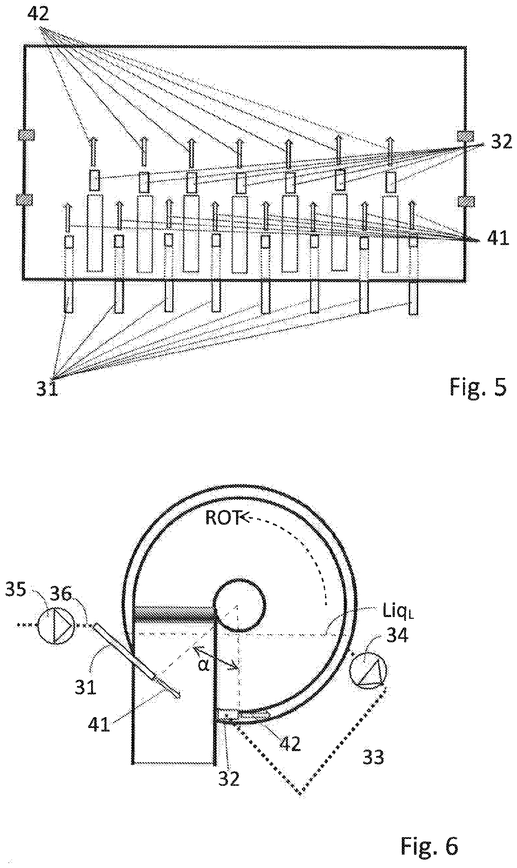

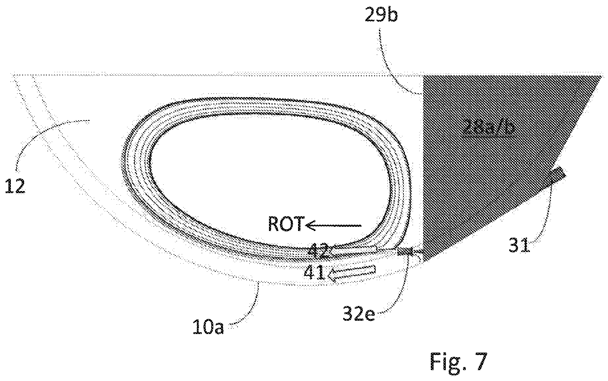

A recirculation system is connected to one of the first and second nozzles (31 and 32 respectively), comprising an inlet in the vat for extracting a part of the suspension kept in the vat, a piping system connecting the inlet with the nozzle in concern, and a pump in said piping system. As could be seen in figure 6 the recirculation system is preferably connected exclusively to the second nozzle (32). The inlet may preferably be located close to liquid level Liq_{L} so that the suction from the inlet may assist in establishment of the agitation flow over the vat bottom. As shown in figure 7 also the second nozzle (32e) may be an eductor nozzle located adjacent the wall (29a) of the collection chute oriented orthogonally with the filter surface of the filter disc (12).The eductor will both withdraw fine particles that settles along the wall (29a) towards the bottom, and assists in establishing a toroid shaped flow in the vat. As also shown in figure 7 a feed system for feeding a raw suspension with fine particle material is connected to one of the first and second nozzles (31 and 32 respectively), and in this embodiment exclusively to the first nozzle (31).

As indicated in figure 7, the rotating shaft of the disc filter is connected to a drive unit (14) that rotates the shaft and the associated filter discs such that the rotational direction (ROT) of the discs coincides with the outflow directions (41 and 42 respectively) of the first and second nozzles (31 and 32 respectively).

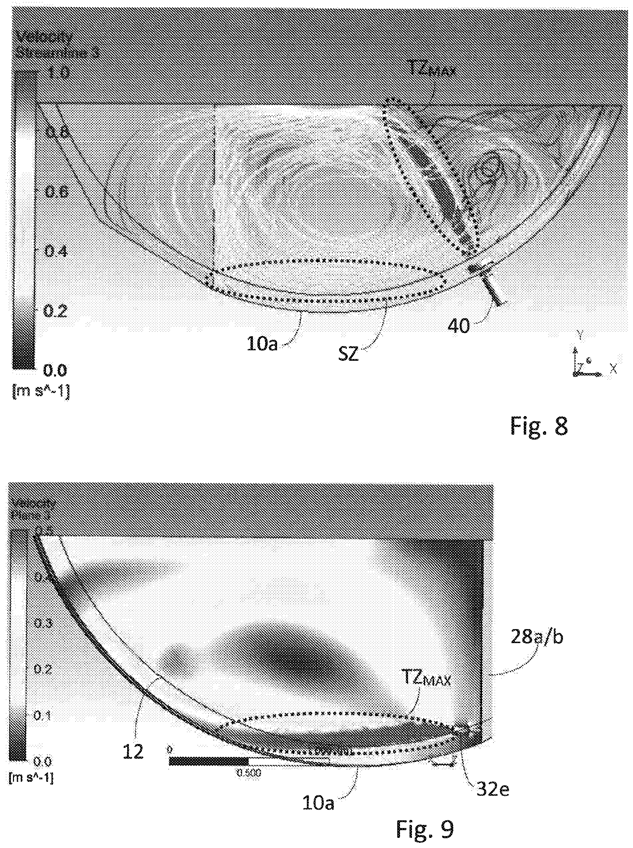

In figures 8 and 9 comparisons between a prior art eductor (40), Fig. 8, similar to WO98/16292, and the invention, Fig. 9, are made. As clearly shown in Fig.8 the maximal turbulent zone TZ_{MAX} is established in the very center of the vat, while only an residual agitation flow finally reaches the settling zone SZ. In order to establish a sufficient residual agitation flow also in the settling zone the total flow from the eductor must be quite large.

According to the invention, as shown in Fig.9, the maximal turbulent zone TZ_{MAX} is instead established in the very settling zone SZ, i.e. the lowermost point of the vat where the settling flow of particles tends to reach. In tests of the invention, the effectiveness of the invention was proved as only 4 m³/h was recirculated in a disc with a diameter of 4 meter in order to establish non settling conditions. In previous designs as much as 20m³/h was recirculated to the filter for dilution. Hence, the mechanical impact on fine particles in the slurry was reduced to 1/5-th (i.e. to 20%). When using an eductor in the second nozzle (32e), the velocity at the throat section was about 6.5 m/s at a rate of 63 l/m for most favorable anti settling function.

The recirculation system and the feed system may be exchanged between first and second nozzles, while the preferred idea to use one of the nozzles for recirculation flow may still be applied. All nozzles may be optimized in order to establish a strong coherent flow and eductors may be used for both first and second nozzle. Also, even if nozzles are arranged one for each disc and one for each chute, some positions may lack a nozzle, such that each second position may lack a first or second nozzle. Activation of each one of the first and second nozzles may also be regulated between total shut off and intensified flow, i.e.using up to 100 % of the recirculation flow for only one or some of the second nozzles.

## Claims

1. A disc filter (1) with an agitator system, used to filter out fine particle material in a raw suspension, comprising: a vat (10) with at least a semicircular bottom wall (10a) located in the bottom part of the disc filter (1); a rotating shaft (11) with a multitude of filter discs (12) rotating in the vat, each filter disc being equipped with a doctor blade arrangement (30) parallel with the filter surface of the filter disc (12), and a collection chute located under the doctor blade and forming a substantially vertical box-like collection chute with an upper opening (26) under the doctor blade and a lower outlet (27) in the lower part of the semicircular bottom part of the vat, said box-like collection chute having two walls (28a/28b) oriented in parallel with the filter surface of the filter disc and two walls (29a/29b) oriented orthogonally to the filter surface of the filter disc; and a first nozzle (31) and a second nozzle (32) arranged in the disc filter (1) ***characterized in that*** the first nozzle (31) is arranged between two collection chutes and between two walls (28a/28b) of these chutes that are oriented parallel with the filter surface of the filter disc and the second nozzle (32) is arranged at one of the walls (29b) of the collection chute oriented orthogonally with the filter surface of the filter disc, and wherein both the first and second nozzles are oriented such that the direction of the outflows from the nozzles coincides with the semicircular form of the bottom wall (10a) of the vat and is parallel to the bottom wall of the vat.

2. The disc filter (1) with an agitator system according to claim 1 ***characterized in* that** the first nozzle (31) is arranged in a circumferential position in the semicircular bottom at an angular position (α) at least 5 degrees ahead of the second nozzle (32), and at the most 90 degrees ahead of the second nozzle (32).

3. The disc filter (1) with an agitator system according to claim 2 ***characterized in* that** the first nozzle (31) is arranged in a vertical plane crossing the shaft (11) that also intersects with a disc (12), thus injecting flow towards the outer periphery of the disc.

4. The disc filter (1) with an agitator system according to claim 2 ***characterized in* that** a recirculation system is connected to one of the first and second nozzles (31 and 32 respectively), comprising an inlet in the vat for extracting a part of the suspension kept in the vat, a piping system (33) connecting the inlet with the nozzle in concern, and a pump (34) in said piping system.

5. The disc filter (1) with an agitator system according to claim 4 ***characterized in* that** the recirculation system is connected exclusively to the second nozzle (32).

6. The disc filter (1) with an agitator system according to claim 5 ***characterized in* that** the second nozzle (32) is an eductor nozzle located adjacent the wall (29b) of the collection chute oriented orthogonally with the filter surface of the filter disc.

7. The disc filter (1) with an agitator system according to claim 1 ***characterized in* that** a feed system (35,36) for feeding a raw suspension with fine particle material is connected to one of the first and second nozzles (31 and 32 respectively).

8. The disc filter (1) with an agitator system according to claim 7 ***characterized in* that** the feed system is exclusively connected to the first nozzle (31).

9. The disc filter (1) with an agitator system according to claim 1 ***characterized in* that** the rotating shaft of the disc filter is connected to drive unit that rotates the shaft and the associated filter discs such that rotational direction (ROT) of the discs coincides with the outflow direction (41 and 42 respectively) of the first and second nozzles (31 and 32 respectively).

## Patentansprüche

1. Scheibenfilter (1) mit einem Rührsystem, das zum Rausfiltern von feinem Partikelmaterial in einer Rohsuspension verwendet wird, umfassend: eine Wanne (10) mit mindestens einer halbkreisförmigen Bodenwand (10a), die in dem unteren Teil des Scheibenfilters (1) angeordnet ist; eine rotierende Welle (11) mit einer Vielzahl von Filterscheiben (12), die in der Wanne rotieren, wobei jede Filterscheibe mit einer Rakelanordnung (30) parallel zu der Filterfläche der Filterscheibe (12) ausgestattet ist, und eine Sammelrutsche, die unter dem Rakel angeordnet ist und eine im Wesentlichen vertikale kastenartige Sammelrutsche mit einer oberen Öffnung (26) unter dem Rakel und einem unteren Auslass (27) in dem unteren Teil des halbkreisförmigen Bodenteils der Wanne bildet, wobei die kastenartige Sammelrutsche zwei parallel zu der Filterfläche der Filterscheibe ausgerichtete Wände (28a/28b) und zwei orthogonal zu der Filterfläche der Filterscheibe ausgerichtete Wände (29a/29b) aufweist und eine erste Düse (31) und eine zweite Düse (32), die in dem Scheibenfilter (1) angeordnet sind, **dadurch gekennzeichnet, dass** die erste Düse (31) zwischen zwei Sammelrutschen und zwischen zwei Wänden (28a/28b) dieser Rutschen angeordnet ist, die parallel zu der Filterfläche der Filterscheibe ausgerichtet sind, und die zweite Düse (32) an einer der Wände (29b) der Sammelrutsche angeordnet ist, die orthogonal zu der Filterfläche der Filterscheibe ausgerichtet ist, und wobei sowohl die erste als auch die zweite Düse so ausgerichtet sind, dass die Richtung der Ausströmungen aus den Düsen mit der Halbkreisform der Bodenwand (10a) der Wanne zusammenfällt und parallel zu der Bodenwand der Wanne ist.

2. Scheibenfilter (1) mit einem Rührsystem gemäß Anspruch 1, **dadurch gekennzeichnet, dass** die erste Düse (31) in einer Umfangsposition in dem halbkreisförmigen Boden in einer Winkelposition (α) angeordnet ist, die wenigstens 5 Grad vor der zweiten Düse (32) und höchstens 90 Grad vor der zweiten Düse (32) liegt.

3. Scheibenfilter (1) mit einem Rührsystem gemäß Anspruch 2, **dadurch gekennzeichnet, dass** die erste Düse (31) in einer vertikalen Ebene angeordnet ist, die die Welle (11) kreuzt, die sich auch mit einer Scheibe (12) schneidet, so dass die Strömung in Richtung des äußeren Umfangs der Scheibe injiziert wird.

4. Scheibenfilter (1) mit einem Rührsystem gemäß Anspruch 2, **dadurch gekennzeichnet, dass** ein Rezirkulationssystem mit einer der ersten und zweiten Düsen (31 bzw. 32) verbunden ist, das einen Einlass in der Wanne zur Entnahme eines Teils der Suspension, gehalten in der Wanne, ein Rohrleitungssystem (33), das den Einlass mit der betreffenden Düse verbindet, und eine Pumpe (34) in diesem Rohrleitungssystem umfasst.

5. Scheibenfilter (1) mit einem Rührsystem gemäß Anspruch 4, **dadurch gekennzeichnet, dass** das Rezirkulationssystem ausschließlich mit der zweiten Düse (32) verbunden ist.

6. Scheibenfilter (1) mit einem Rührsystem gemäß Anspruch 5, **dadurch gekennzeichnet, dass** die zweite Düse (32) eine Ejektordüse ist, die neben der Wand (29b) der Sammelrutsche angeordnet und orthogonal zu der Filterfläche der Filterscheibe ausgerichtet ist.

7. Scheibenfilter (1) mit einem Rührsystem gemäß Anspruch 1, **dadurch gekennzeichnet, dass** ein Zuführsystem (35, 36) zum Zuführen einer Rohsuspension mit feinem Partikelmaterial mit einer der ersten und zweiten Düsen (31 bzw. 32) verbunden ist.

8. Scheibenfilter (1) mit einem Rührsystem gemäß Anspruch 7, **dadurch gekennzeichnet, dass** das Zuführsystem ausschließlich mit der ersten Düse (31) verbunden ist.

9. Scheibenfilter (1) mit einem Rührsystem gemäß Anspruch 1, **dadurch gekennzeichnet, dass** die rotierende Welle des Scheibenfilters mit einer Antriebseinheit verbunden ist, die die Welle und die zugehörigen Filterscheiben so dreht, dass die Drehrichtung (ROT) der Scheiben mit der Ausströmungsrichtung (41 bzw. 42) der ersten und zweiten Düse (31 bzw. 32) übereinstimmt.

## Revendications

1. Filtre à disque (1) avec système d'agitateur, utilisé pour filtrer de la matière en fines particules dans une suspension brute, comprenant : une cuve (10) dotée d'au moins une paroi inférieure semi-circulaire (10a) située à dans la partie inférieure du filtre à disque (1) ; un arbre rotatif (11) doté d'une multitude de disques de filtre (12) tournant dans la cuve, chaque disque de filtre étant équipé d'un agencement de lames docteur (30) parallèle à la surface de filtration du disque à filtre (12), et un toboggan de collecte situé sous la lame docteur et formant un toboggan de collecte en forme de boîte substantiellement vertical avec une ouverture supérieure (26) sous la lame docteur et une sortie inférieure (27) dans la partie inférieure de la partie inférieure semi-circulaire de la cuve, ledit toboggan de collecte en forme de boîte comportant deux parois (28a/28b) orientées parallèlement à la surface de filtration du disque de filtre et deux parois (29a/29b) orientées orthogonalement à la surface de filtration du disque de filtre ; et une première buse (31) et une seconde buse (32) disposées dans le filtre à disque (1), **caractérisé en ce que** la première buse (31) est disposée entre deux toboggans de collecte et entre deux parois (28a/28b) de ces toboggans qui sont orientées parallèlement à la surface de filtration du disque de filtre et la seconde buse (32) est disposée au niveau d'une des parois (29b) du toboggan de collecte orientées orthogonalement à la surface de filtration du disque de filtre, et que les première et seconde buses sont toutes deux orientées de manière à ce que la direction des écoulements des buses coïncide avec la forme semi-circulaire de la paroi inférieure (10a) de la cuve et soit parallèle à la paroi inférieure de la cuve.

2. Filtre à disque (1) avec système d'agitateur selon la revendication 1, **caractérisé en ce que** la première buse (31) est disposée en position circonférentielle dans le fond semi-circulaire à une position angulaire (α) au moins 5 degrés en amont de la seconde buse (32) et au moins 90 degrés en amont de la seconde buse (32).

3. Filtre à disque (1) avec système d'agitateur selon la revendication 2, **caractérisé en ce que** la première buse (31) est disposée dans un plan vertical croisant l'arbre (11) qui se croise également avec un disque (12), en injectant ainsi du flux vers la périphérie intérieure du disque.

4. Filtre à disque (1) avec système d'agitateur selon la revendication 2, **caractérisé en ce qu'**un système de recirculation est connecté à l'une des première et seconde buses (31 et 32 respectivement), comprenant une entrée dans la cuve pour extraire une partie de la suspension conservée dans la cuve, un système de canalisation (33) connectant l'entrée à la buse concernée, et une pompe (34) dans ledit système de canalisation.

5. Filtre à disque (1) avec système d'agitateur selon la revendication 4, **caractérisé en ce que** le système de recirculation est connecté exclusivement à la seconde buse (32).

6. Filtre à disque (1) avec système d'agitateur selon la revendication 5, **caractérisé en ce que** la seconde buse (32) est une buse d'éduction adjacente à la paroi (29b) du toboggan de collecte orientée orthogonalement à la surface de filtration du disque de filtre.

7. Filtre à disque (1) avec système d'agitateur selon la revendication 1, **caractérisé en ce qu'**un système d'alimentation (35, 36) destiné à alimenter une suspension brute avec de la matière en fines particules est connecté à l'une des première et seconde buses (31 et 32 respectivement).

8. Filtre à disque (1) avec système d'agitateur selon la revendication 7, **caractérisé en ce que** le système d'alimentation est exclusivement connecté à la première buse (31).

9. Filtre à disque (1) avec système d'agitateur selon la revendication 1, **caractérisé en ce que** l'arbre rotatif du filtre à disque est connecté à une unité pilote qui fait tourner l'arbre et les disques de filtre associés de manière à ce que le sens de rotation (ROT) des disques coïncide avec la direction d'écoulement (41 et 42 respectivement) des première et seconde buses (31 et 32 respectivement).
